# EUROPEAN PATENT APPLICATION

(11) **EP 4 270 564 A1**
(43) Date of publication of application: **01.11.2023**
(21) Application number: 21911278.6
(22) Date of filing: 26.11.2021
(51) Int. Cl.: H01M 10/04

(54) **METHOD AND APPARATUS FOR MANUFACTURING UNIT CELL**

(30) Priority: 23.12.2020 KR 20200182657; 08.01.2021 KR 20210002904; 22.11.2021 KR 20210161717
(71) Applicant: LG Energy Solution, Ltd., Seoul 07335 (KR)
(72) Inventor: CHUNG, Joo Young, Daejeon 34122 (KR); LEE, Sang Woo, Daejeon 34122 (KR); JUNG, Su Taek, Daejeon 34122 (KR); BAE, Sang Ho, Daejeon 34122 (KR)
(74) Representative: Goddar, Heinz J.
(86) International application number: PCT/KR2021/017652
(87) International publication number: WO 2022/139211

(57) **Abstract**

The present invention provides an apparatus for manufacturing a unit cell, in which a lower separator and an upper separator continuously move in a longitudinal direction, and the lower separator and the upper separator are cut between electrodes adjacent to each other in a process of manufacturing the unit, which is provided in a state in which the electrodes are stacked between the lower separator and the upper separator and on the upper separator, respectively, the apparatus comprising: a fixed part disposed under the lower separator and heated to a predetermined temperature; a movable part aligned with the fixed part in a vertical direction on the upper separator; and a cutter coupled to the movable part, heated to a predetermined temperature, and configured to cut the upper separator and the lower separator, wherein the lower separator and the upper separator are thermally fused between the fixed part and the movable part and cut by the cutter while passing between the fixed part and the movable part.

## Description

### CROSS-REFERENCE TO RELATED APPLICATION

The present application claims the benefit of the priority of Korean Patent Application Nos. 10-2020-0182657, filed on December 23, 2020, 10-2021-0002904, filed on January 08, 2021, and 10-2021-0161717, filed on November 22, 2021, which are hereby incorporated by reference in their entirety.

### TECHNICAL FIELD

The present invention relates to a method and apparatus for manufacturing a unit cell, and more particularly, to a method and apparatus for manufacturing a unit cell, in which a lower separator and an upper separator are bonded (sealed) and cut at the same time to prevent a secondary battery from being short-circuited by the bonding of the separators and/or scattering of electrodes.

### BACKGROUND ART

Recently, many studies on secondary batteries are being carried out because the secondary batteries are rechargeable unlike primarily batteries, and also, the possibility of compact size and high capacity is high. As technology development and demands for mobile devices increase, the demands for secondary batteries as energy sources are rapidly increasing.

Such a secondary battery is configured so that an electrode assembly is embedded in a battery case (for example, a pouch, a can, and the like). The electrode assembly mounted in the battery case is repeatedly chargeable and dischargeable because of a structure in which a positive electrode/a separator/a negative electrode are stacked. The electrode assembly is manufactured in various manners. However, generally, the electrode assembly may be manufactured in a manner in which, after a unit cell 4 is prepared in advance, a plurality of units 4 are stacked to manufacture the electrode assembly.

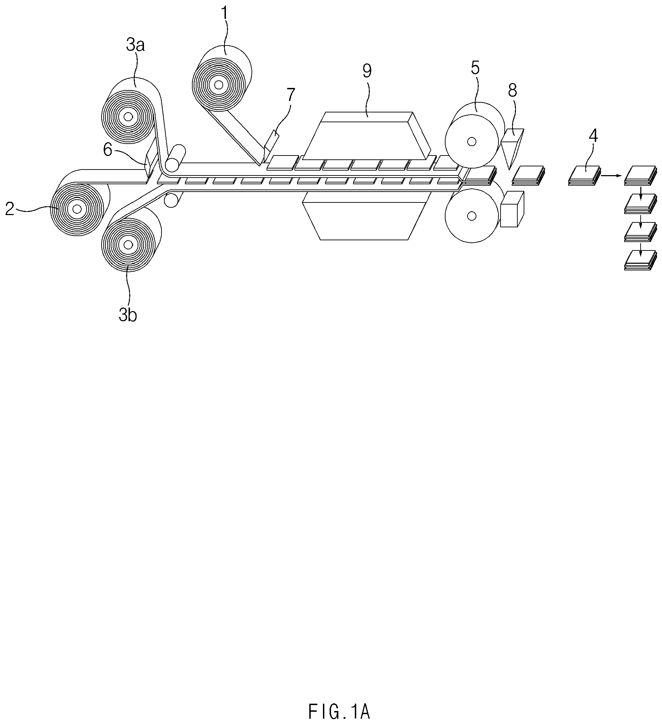

That is, referring to FIG. 1a, which illustrates a state in which a unit cell is manufactured according to the related art, in a method for manufacturing the unit cell 4 according to the related art, a positive electrode 1, an upper separator 3a, a negative electrode 2, and a lower separator 3b are continuously wound to be supplied in a state in which each of the positive electrode 1, the upper separator 3a, the negative electrode 2, and the lower separator 3b is wound in the form of a roll (however, stacking positions of the positive electrode and the negative electrode may be different, and the separator, the positive electrode, and the negative electrode may be additionally stacked, or the separator may be disposed at the uppermost end, rather than the positive electrode or the negative electrode).

The separators 3 (3a and 3b) are continuously supplied without disconnection, the negative electrode 2 is supplied between the upper separator 3a and the lower separator 3b, and the positive electrode 1 is supplied onto the upper separator 3a.

Here, the separators 3 are continuously supplied without being cut. On the other hand, the positive electrode 1 and the negative electrode 2 are provided in a state of being cut to predetermined sizes by respective cutters 6 and 7, respectively.

The positive electrode 1 and the negative electrode 2 are paired and stacked vertically with the upper separator 3a therebetween and are disposed to be spaced a predetermined distance from the positive electrode 1 and the negative electrode 2, which are paired to be adjacent to each other.

That is, the separators 3 are continuously connected, and the negative electrode 2 and the positive electrode 1 pass through a laminating device 9 in a state of being spaced a predetermined distance from the negative electrode 2 and the positive electrode 1. In the laminating device 9, heat and a pressure are applied so that the negative electrode 2 and the positive electrode 1 are bended to contact points with the separators 3.

After the positive electrode 1 and the negative electrode 2 pass through the laminating device 9 in the state in which the positive electrode 1 and the negative electrode 2 are bonded to the separators 3, the separators 3 are cut to be provided as individual unit cells between the positive electrode 1 and the positive electrode 1, which are adjacent to each other.

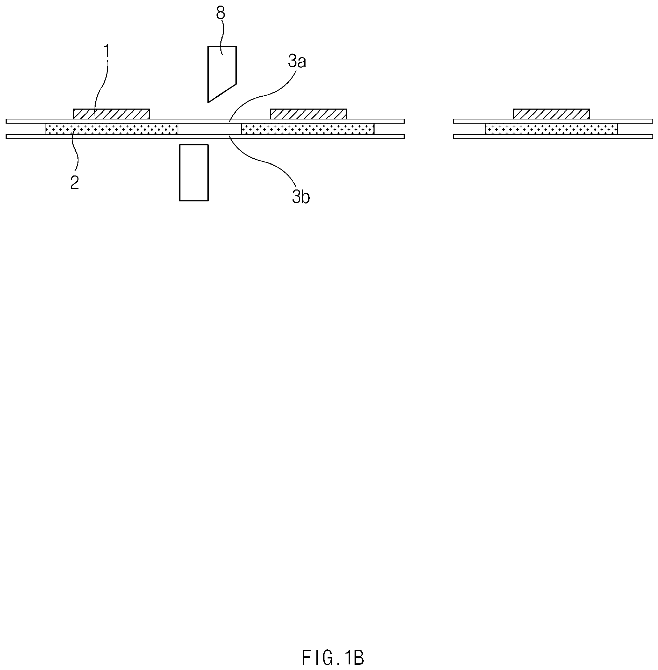

That is, as illustrated in FIG. 1b, which illustrates a shape of a cutter, which cuts the separators, according to the related art, after the laminating (bonding) of the electrodes 1 and 2 and the separators 3 due to the heat and pressure are performed, the separators 3 are cut between the electrodes adjacent to each other to manufacture the individual unit cells 4.

However, the cutter 8 according to the related art has a structure in which the pressure is applied vertically to cut the separators 3. Thus, when any one of the separators 3a and 3b is not properly cut, there is a problem in that the separators 3a and 3b are folded in a direction in which the pressure is applied.

After the unit cells 4 are manufactured, since the plurality of unit cells 4 are stacked to be manufactured as an electrode assembly, the folding of the separators 3 occurs, and thus, when a portion of the negative electrode 2 or the positive electrode 1 is exposed, short circuit occurs inside the electrode assembly.

That is, referring to FIG. 1a, the points at which the separator 3 and the electrodes 1 and 2 are in contact with each other even after passing through a pressing roller 5 by passing through the laminating device 9. However, in the structure according to the related art, the upper separator 3a and the lower separator 3b are not bonded as illustrated in FIG. 1b, but are spaced apart from each other, and thus, there is a problem in that the separators are folded during the cutting.

### DISCLOSURE OF THE INVENTION

### TECHNICAL PROBLEM

Therefore, a main object of the present invention is provide a method and apparatus for manufacturing a unit cell, in which cutting and sealing of an upper separator and a lower separator are performed at the same time so that folding of the upper separator and the lower separator and/or scattering of electrodes are prevented from occurring when the separators are cut.

### TECHNICAL SOLUTION

An apparatus for manufacturing a unit cell, which is provided in the present invention to achieve the foregoing object, and in which a lower separator and an upper separator continuously move in a longitudinal direction, and the lower separator and the upper separator are cut between electrodes adjacent to each other in a process of manufacturing the unit, which is provided in a state in which the electrodes are stacked at regular intervals between the lower separator and the upper separator, the apparatus comprises: a fixed part disposed under the lower separator and heated to a predetermined temperature; a movable part aligned with the fixed part in a vertical direction on the upper separator; and a cutter coupled to the movable part, heated to a predetermined temperature, and configured to cut the upper separator and the lower separator, wherein the lower separator and the upper separator are cut by the cutter and thermally fused while passing between the fixed part and the movable part.

Each of the movable part and the fixed part may comprise a roller that rotates while the lower separator and the upper separator pass therebetween, and the cutter may protrude from a surface of the movable part to press and cut the upper separator and the lower separator when the movable rotates.

A plurality of cutters may be disposed at regular intervals on the surface of the movable part.

Two cutters may be disposed at an interval of 180 degrees from a center of the movable part, or four cutters may be disposed at an interval of 90 degrees from a center of the movable part.

The cutter may be formed so that inclined surfaces are formed at both sides so as to be symmetrical to each other, and an end, at which the inclined surfaces are in contact with each other, has a sharp shape.

An angle between both the inclined surfaces of the cutter may be 15° or more.

The cutter and the movable part may be configured to be integrated with each other. The fixed part may have a bar shape and is disposed to stand vertically under the lower separator, the movable part may be disposed to stand vertically above the upper separator so as to be slid vertically downward, and the cutter may be formed integrally to have a sharp shape at an end of the movable part.

The movable part may be disposed to be dislocated so that the movable part passes through the lower separator and the upper separator to face one surface of the fixed part and to descend.

An end of the movable part may be formed so that a surface facing the fixed part is a flat surface, and an opposite surface is an inclined surface, wherein an angle of the inclined surface may be 15° or more. An angle of the inclined surface formed on the end of the movable part may be formed in a range of 15° to 120°.

Furthermore, the present invention further provides a method for manufacturing a unit cell. A method for manufacturing a unit cell, which is provided in the present invention and in which a lower separator and an upper separator continuously move in a longitudinal direction, and the lower separator and the upper separator are cut between electrodes adjacent to each other in a process of manufacturing the unit, which is provided in a state in which the electrodes are stacked at regular intervals between the lower separator and the upper separator, the method comprises: an electrode and separator transfer process of providing electrodes and separators, in which the lower separator and the upper separator continuously move in the longitudinal direction, and the electrodes and the separators are provided in a state in which the electrodes are stacked at regular intervals between the lower separator and the upper separator; a cutter heating process of heating a cutter, which is coupled to an end of the movable part and slid to pass through the lower separator and the upper separator, to a predetermined temperature; and a cutting process of sliding the movable part to cut the lower separator and the upper separator by the cutter when the lower separator and the upper separator are disposed between the electrodes adjacent to each other at a sliding position of the cutter, wherein, when the cutting is performed by the cutter, the lower separator and the upper separator are thermally fused at the same time by the heated cutter.

The fixed part may be disposed under the lower separator, and the movable part is disposed above the upper separator, and in the cutting process, when the movable part descends to pass through the upper separator and the lower separator, the fixed part may be disposed to be dislocated so as to support the lower separator at a lower side.

All the movable part, the fixed part, and the cutter may be heated to a predetermined temperature. For example, all the fixed part, the movable part, and the cutter may be heated in a range of 60°C to 250°C. Here, the cutter may be preferably heated to a temperature higher than that of the fixed part.

The movable part may be configured so that one surface facing the fixed part at an end thereof is formed as a flat surface, and an inclined surface is formed on the other surface to have a sharp shape.

An angle between the flat surface and the inclined surface at the end of the movable part formed to have the sharp shape may be formed in a range of 15° to 120°.

A sliding speed of the movable part may be adjusted according to heating temperatures of the movable part and the fixed part. That is, when each of the movable part and the fixed part is heated to a relatively high temperature, the sliding speed of the movable part may be adjusted to be relatively increase, and when each of the movable part and the fixed part is heated to a relatively low temperature, the sliding speed of the movable part may be adjusted to be relatively decrease.

The heating temperatures of the movable part and the fixed part may be adjusted according to thicknesses of the lower separator and the upper separator.

### ADVANTAGEOUS EFFECTS

According to the present invention having the above-described configuration, since the cutting of the separators are performed by the cutter so that the separators are sealed when cut, the folding of the separators and/or the scattering of the electrodes may be suppressed.

The movable part may be heated to the predetermined temperature. Here, the movable part is heated to a temperature higher than that of the fixed part, and thus, the instantaneous thermal fusion may be achieved while cutting the inside of the separators.

The movable part may be configured so that one surface facing the fixed part is formed as the flat surface, and the other surface has the sharp shape. Also, the movable part is limited in range at a specific angle (15° to 120°), and thus, when cut, the thermal fusion time, the contact area with the separator, and the pressure applied to the separator may be adjusted.

For example, when the angle of the end of the movable part is less than 15°, the thermal fusion efficiency may be lowered because the pressure acting for the thermal fusion of the separator. On the other hand, when the angle exceeds 120°, the pressure acting for cutting the separator may be reduced to increase in possibility of occurrence of cutting defects and unnecessarily sealed area. Therefore, in the present invention, the angle of the end of the movable part is limited in range of 15° to 120°, and thus, the thermal fusion with the separator and the cutting may be performed at the same time.

Furthermore, the descending speed of the movable part may be adjusted according to the heating temperatures of the movable part and the fixed part or the angle of the end of the movable part due to the thickness of the separator.

### BRIEF DESCRIPTION OF THE DRAWINGS

FIG. 1a is a schematic view illustrating a state in which a unit cell is manufactured through a method according to a related art.
FIG. 1b is a simplified side view illustrating a shape of a cutter, which cuts a separator, according to the related art.
FIG. 2 is a simplified view illustrating an apparatus for manufacturing a unit cell according to a first embodiment of the present invention.
FIG. 3 is a view illustrating a rotation position of a cutter when an electrode is disposed between a fixed part and a movable part of the apparatus for manufacturing the unit cell according to the first embodiment of the present invention.
FIG. 4 is a view illustrating a rotation position of the cutter when separators are disposed between the fixed part and the movable part of the apparatus for manufacturing the unit cell according to the first embodiment of the present invention.
FIG. 5 is an enlarged view illustrating a portion C of FIG. 4.
FIG. 6 is a view illustrating a state just before a cutter, which is formed to be integrated with a movable part, cuts separators in an apparatus for manufacturing a unit cell according to a second embodiment of the present invention.
FIG. 7 is a view illustrating a state when the cutter, which is formed to be integrated with the movable part, cuts separators in the apparatus for manufacturing the unit cell according to the second embodiment of the present invention.
FIG. 8 is a graph illustrating a difference in bonding distance (a length of a portion at which bonding (sealing) is performed) and bonding force between an upper separator and a lower separator according to an angle of the cutter in the apparatus for manufacturing the unit cell according to the second embodiment of the present invention.
FIG. 9 is a view illustrating an order in a method for manufacturing a unit cell, which is applied to an apparatus for manufacturing a unit cell according to the present invention.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to an apparatus for manufacturing a unit cell, in which electrodes 1 and 2 are stacked between a lower separator 3b and an upper separator 3a and on the upper separator 3a, respectively, and when the separators 3 (3a and 3b) are cut, sealing of the separators 3 are performed at the same time. However, if two or more separators are provided like a unit cell, in which the electrode is stacked only between the lower separator 3b and the upper separator 3a, and a unit cell (in which three separators are stacked), in which the separator is additionally stacked on the uppermost electrode, it may be applied to the manufacture all types of unit cells.

In the present invention, the apparatus for manufacturing the unit cell may replace a pressing roller 5 and a cutter 8 for cutting the separator 3 or only the cutter 8 in the process illustrated in FIG. 1A.

That is, in the configuration of FIG. 1a, the pressing roller 5 and the cutter 8 may be removed, or only the cutter 8 may be removed. Then, the apparatus for manufacturing the unit cell, which is provided in an embodiment of the present invention may be installed instead.

The apparatus for manufacturing the unit cell, which is provided in the present invention, is configured to comprise a fixed part, a movable part, and a cutter coupled to the movable part or formed to be integrated with the movable part.

As the apparatus for manufacturing the unit cell, which is provided in the present invention, is provided at a position disposed in the cutter 8 according to the related art, the lower separator 3b and the upper separator 3a continuously move in a longitudinal direction and are provided in a state in which a positive electrode 1 and a negative electrode 2 are stacked between the lower separator 3b and the upper separator 3a and on the upper separator 3a, respectively, i.e., a state in which a 'positive electrode/upper separator/negative electrode/lower separator' or a 'negative electrode/upper separator/positive electrode/lower separator' are sequentially stacked from top to bottom.

Here, a fixed part according to the present invention is disposed under the lower separator 3b and may be selectively heated to a predetermined temperature. The movable part is aligned in a direction perpendicular to the fixed part from the upper separator 3a and is heated to a predetermined temperature. The cutter cuts the upper separator 3a and the lower separator 3b in a state in which heat is conducted or heated from the movable part or is directly applied to be heated.

In addition, while passing between the fixed part and the movable part, the lower separator 3b and the upper separator 3a may be thermally fused between the fixed part and the movable part and simultaneously cut by the cutter.

Hereinafter, embodiments according to the present invention will be described with reference to the accompanying drawings.

### First embodiment

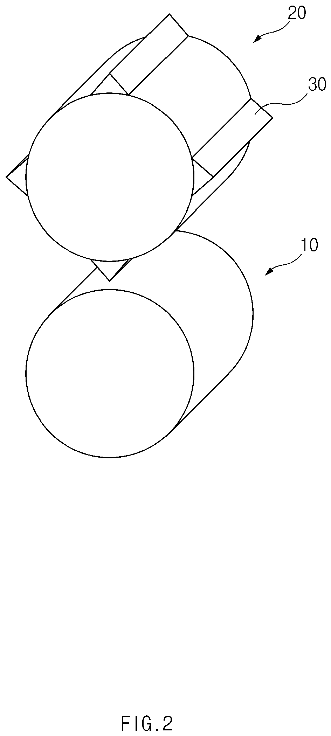

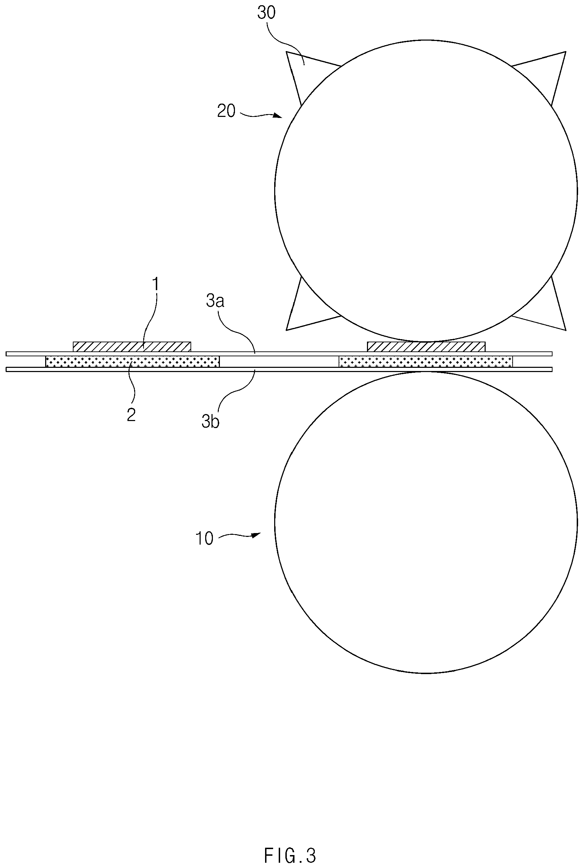

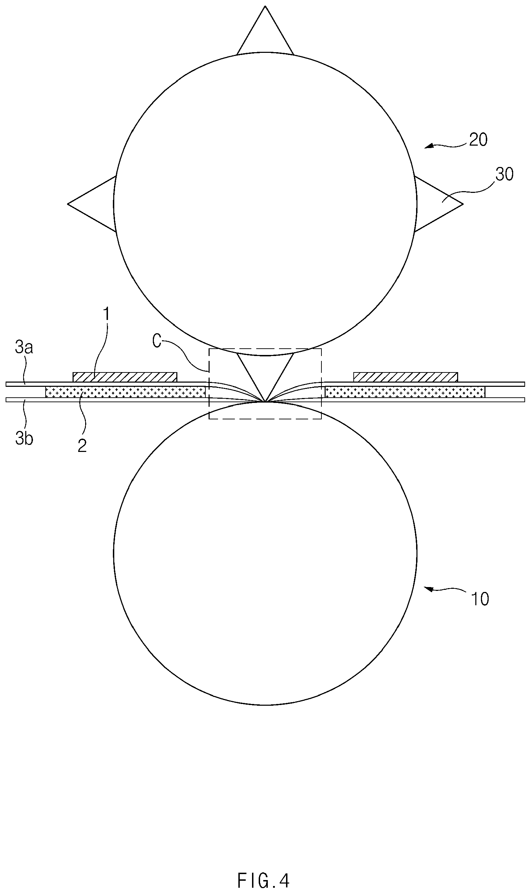

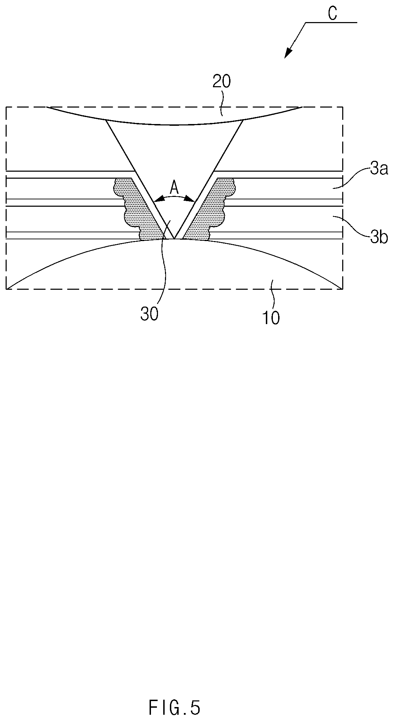

FIG. 2 is a simplified view illustrating an apparatus for manufacturing a unit cell according to a first embodiment of the present invention, FIG. 3 is a view illustrating a rotation position of a cutter when an electrode is disposed between a fixed part and a movable part of the apparatus for manufacturing the unit cell according to the first embodiment of the present invention, FIG. 4 is a view illustrating a rotation position of the cutter when separators are disposed between the fixed part and the movable part of the apparatus for manufacturing the unit cell according to the first embodiment of the present invention, and FIG. 5 is an enlarged view illustrating a portion C of FIG. 4.

Referring to the accompanying drawings, in this embodiment, each of the movable part 20 and the fixed part 10 is provided in the form of a roller that rotate while the lower separator 3b and the upper separator 3a pass therebetween.

Each of the movable part 10 and the fixed part 20 provided in the form of the roller may have a length equal to or greater than a width of each of the separators 3a and 3b so that sealing and cutting are performed in a width direction of the separators 3 (3a and 3b) and may have a diameter that varies according to the number of cutters 30, an arranged position, a size of each of the electrodes 1 and 2, and an interval between the electrodes 1 and 2.

That is, as illustrated in FIGS. 3 and 4, the cutter 30 is provided in plurality at regular intervals on a surface of the movable part 20. The cutter 30 is configured to be disposed at a position that is spaced apart from the electrodes 1 and 2 without being in contact with the electrodes 1 and 2 when the electrodes 1 and 2 pass between the movable part 20 and the fixed part 10 (a state in FIG. 3) and disposed at a position at which the upper separator 3a and the lower separator 3b are pressed when the upper separator 3a and the lower separator 3b pass between the movable part 20 and the fixed part 10 (a state in FIG. 4).

Accordingly, a diameter of the roller corresponding to the movable part 20 may be determined in consideration of the size and interval of each of the electrodes 1 and 2. Also, here, two cutters 30 may be configured to be disposed at an interval of 180 degrees from a center of the movable part 20, or four cutters 30 are configured to be disposed at an interval of 90 degrees. Of course, in addition to the two or four cutters, if the separators 3a and 3b are cut without interfering with the electrodes 1 and 2, the cutters may be disposed in various numbers at regular intervals.

In this embodiment, the cutter 30 is formed so that inclined surfaces are formed at both sides so as to be symmetrical to each other, and an end at which the inclined surfaces are in contact with each other has a sharp shape.

Here, an angle A (see FIG. 5) between both the inclined surfaces of the cutter 30 is formed to be 15° or more. Preferably, the angle between the inclined surfaces is formed within a range of 15° to 120°.

The cutter 30 presses the upper separator 3a and the lower separator 3b in a state in which the heat generated in the movable part 20 is conducted and heated, or in a state in which the cutter 30 is directly heated without passing through the movable part 20.

Thus, the separators 3a and 3b are cut at points that is in contact with the cutter 30. Here, while the cutter 30 rotates, a pressure is applied to the inclined surface, and heat and a pressure are also applied to the lower fixed part 10. As a result, the separators 3a and 3b are cut by the cutter 30 and thermally fused by the heat and pressure at the same time. Thus, even after being cut, since the upper separator 3a and the lower separator 3b are in the state of thermally fused at the cut points, folding may be prevented.

If an angle A of the cutter 30 is formed too small, since a sufficient pressure is transmitted, and thus, the cutting is performed first before the thermal fusion is achieved, it is preferable to be formed at 15° or more as described above. However, the range may be further limited according to a thickness or material of the separator 3 or a moving speed of the separator 3.

For reference, a heater (not shown) may be embedded in each of the movable part 20, the fixed part 10, and the cutter 30 or may be configured to conduct heat from an external heat source.

The movable part 20 and the fixed part 10, which are heated as described above, may be heated in a range of 60°C to 250°C. The reason in which the temperature is limited to the range of 60°C to 250°C is because, when the temperature is less than 60°C, it is difficult to achieve efficient thermal fusion of the separator 3, and when the temperature exceeds 250°C, it is difficult to seal the separator 3 due to the melted separator 3. Furthermore, an interval between the cutter 30 and the fixed part 10 may be selected within an appropriate range according to the thickness and material of the separator 3 and the moving speed of the separator 3.

Furthermore, although the fixed part 10 is illustrated as a perfect circle in the drawing, the fixed part 10 may have a structure in which a concave groove is formed so that an end of the cutter 30 is insertable so that the pressure applied when the separators 3 is in contact with the fixed part 10 increases or is concentrated. Alternatively, when the end of the cutter 30 presses the separator 3, the fixed part 10 is made of a material having elasticity or is configured so that a layer having elasticity is stacked or applied on a surface so as to elastically support the separator 3.

In addition, an elastic body may be coupled or applied to the surface of the fixed part 10 to protect the separator 3 when the fixed part is in contact with the separator 3.

### Second embodiment

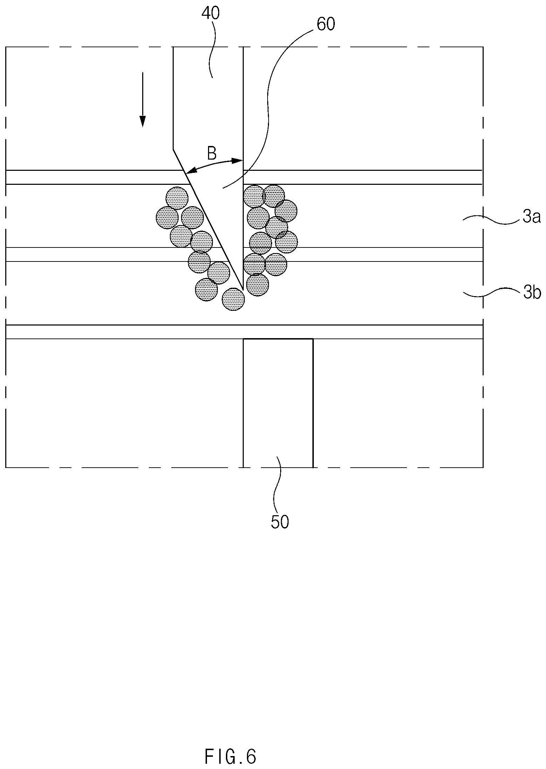

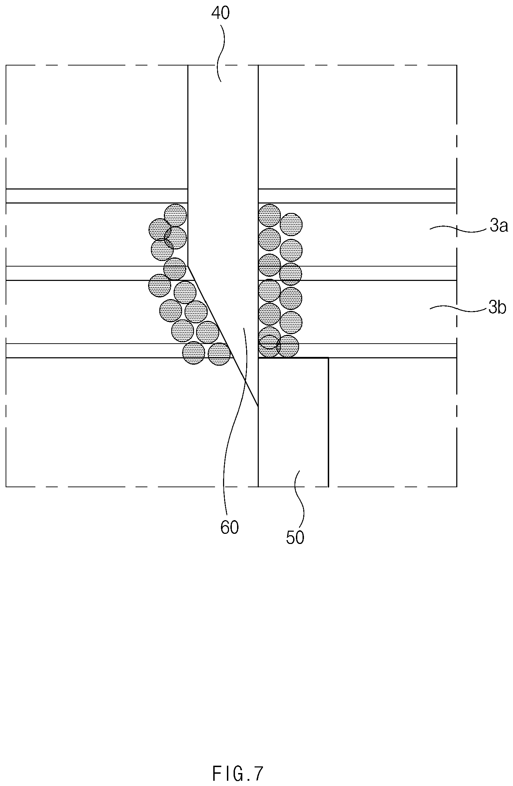

FIG. 6 is a view illustrating a state just before a cutter, which is formed to be integrated with a movable part, cuts separators in an apparatus for manufacturing a unit cell according to a second embodiment of the present invention, and FIG. 7 is a view illustrating a state when the cutter, which is formed to be integrated with the movable part, cuts separators in the apparatus for manufacturing the unit cell according to the second embodiment of the present invention.

Referring to FIGS. 6 and 7, each of a fixed part 50 and a movable part 40, which are provided in this embodiment, is configured to have a bar shape.

The fixed part 50 is disposed to stand vertically under the lower separator 3b, and an upper end of the fixed part 50 is configured to have a flat surface so as to support a lower side of the lower separator 3b.

Also, the movable part 40 is disposed to stand vertically on the upper separator 3a and is configured to be slid vertically downward. That is, the movable part 40 is coupled to an elevation device (not shown) to descend downward so as to press the upper separator 3a. Thus, the movable part 40 provided in this embodiment may be provided as a piston that is slid in a cylinder, a link device for converting rotational motion into a linear motion, a gear device, and the like.

The cutter 60 provided in this embodiment is provided in a structure that is integrally formed to have a sharp shape at an end of the movable part 40. Alternatively, the cutter 60 may be provided in a shape that is coupled to be fixed to the end of the movable part 40 provided in the form of a bar.

Furthermore, as in the first embodiment, the fixed part 50 and the movable part 40 are heated by a heater or a separate heat source, and the cutter 60 is heated by receiving heat from the movable part 40 or by directly receiving heat from a heat source. The movable part 40 is disposed to be dislocated so that the movable part 40 passes through the lower separator 3b and the upper separator 3a to face one surface of the fixed part 50 and to descend.

That is, only the movable part 40 and the cutter 60 are heated, or the movable part 40, the cutter 60, and the fixed part 50 are heated to a predetermined temperature. For example, all the fixed part 50, the movable part 40, and the cutter 60 may be heated in a range of 60°C to 250°C. However, it is preferable that the cutter 60 is heated to a temperature greater than that of the fixed part 50.

Since the movable part 40 may pass through and press cut surfaces of the separators 3, and thermal fusion is performed by the pressing, a heating temperature at which the thermal fusion is achieved may vary depending on a descending speed. Therefore, it is heated to a temperature that is sufficient to achieve the thermal fusion as quickly as possible.

The movable part 40, the cutter 60, and the fixed part 50, which are heated as described above, may be heated in a range of 60°C to 250°C. As described above, the reason in which the temperature is limited to the range of 60°C to 250°C is because, when the temperature is less than 60°C, it is difficult to achieve efficient thermal fusion of the separator 3, and when the temperature exceeds 250°C, it is difficult to seal the separator 3 due to the melted separator 3. Furthermore, an interval between the fixed part 50 and the movable part 40 may be selected in an appropriate range according to a thickness and material of the separator 3 and a moving speed of the separator 3 and may be continuously adjusted during a manufacturing process according to the thermal fusion and cut state.

In addition, an elastic body (not shown) may be coupled or applied to the surface of the fixed part 50 to protect the separator 3 when the fixed part is in contact with the separator 3.

Furthermore, in this embodiment, the cutter 60 is configured to have a sharp shape because one surface facing the fixed part 50 is formed as a flat surface, and an inclined surface is formed on the other surface. It is preferable that an angle B between the flat surface and the inclined surface at the end of the movable part 10 formed in the sharp shape is not limited, but is formed in a range of 15° to 120°.

For example, when the angle of the end of the cutter 60 is less than 15°, the thermal fusion efficiency may be lowered because the pressure acting for the thermal fusion of the separator 3. On the other hand, when the angle exceeds 120°, the pressure acting for cutting the separator 3 may be reduced to increase in possibility of occurrence of cutting defects. Therefore, in the present invention, the angle of the end of the cutter 60 is limited in range of 15° to 120°, and thus, the thermal fusion with the separator 3 and the cutting may be performed at the same time.

Therefore, when the cutting is performed to be limited to a range of a specific angle (15° to 120°), since a thermal fusion time, a contact area with the separator, a pressure applied to the separator, etc. are adjusted, the movable part 40 may be adjusted in descending speed according to heating temperatures of the movable part 40, the cutter 60, and the fixed part 50.

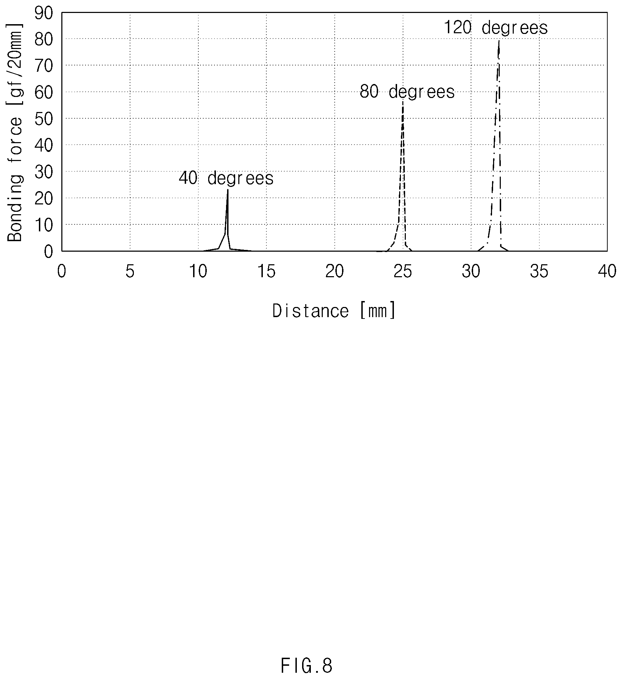

FIG. 8 is a graph illustrating a difference in bonding distance (a length of a portion at which bonding is performed) and bonding force between the upper separator and the lower separator according to an angle of the cutter in the apparatus for manufacturing the unit cell according to the second embodiment of the present invention.

As illustrated in FIG. 8, as the angle B between the flat surface and the inclined surface increases, a bonding area between the separators 3a and 3b increases to increase in bonding distance (a length of a portion at which the bonding is performed) and also increase in bonding force. As the bonding force increases, more stable bonding may be maintained, but if the bonding distance increases, it may act as stress on the electrode placed between the separators 3a and 3b, and an excessive pressure may be applied to the separators 3a and 3b to cause damage. As a result, the angle B between the flat surface and the inclined surface may be determined in consideration of the thickness of each of the separators 3a and 3b or the size of the electrode.

Furthermore, in order to secure a proper thermal fusion time and cutting time, in the cutting process, the transfer of the electrode and the separator may be stopped while the movable part 40 is slid to cut the lower separator 3b and the upper separator 3a.

The present invention further provides a method for manufacturing a unit cell that is applied to the above-described apparatus for manufacturing the unit cell.

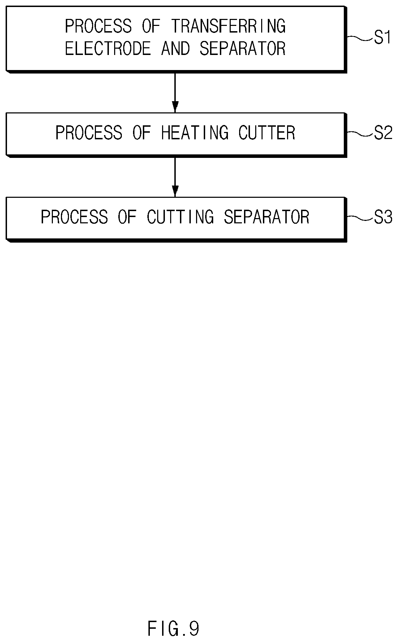

FIG. 9 is a view illustrating an order in a method for manufacturing a unit cell, which is applied to an apparatus for manufacturing a unit cell according to the present invention.

A method for manufacturing a unit cell, which is provided in the present invention, provides a method, in which a lower separator 3b and an upper separator 3a continuously move in a longitudinal direction, and the lower separator 3b and the upper separator 3a are cut and simultaneously thermally fused between electrodes adjacent to each other during a process of manufacturing a unit cell in which electrodes (a positive electrode and a negative electrode) are respectively stacked between the lower separator 3b and the upper separator 3a and on the upper separator 3a or a process of manufacturing a unit cell in which electrodes are stacked only between the lower separator 3b and the upper separator 3a.

The method for manufacturing the unit cell according to the present invention comprises 'a process (S1) of transferring electrodes and separators', 'a process (S2) of heating a cutter', and 'a process (S3) of cutting the separators', and when the separators 3 are cut by the cutter, the lower separator 3b and the upper separator 3a are thermally fused at the same time by the heated cutter.

In the process of transferring the electrodes 1 and 2 and the separators 3a and 3b, the lower separator 3b and the upper separator 3a continuously move in the longitudinal direction through a laminating device 9 (see FIG. 1A), and also, the electrodes 1 and 2 and the separators 3 are provided in a state in which the electrodes are stacked between the lower separator 3b and the upper separator 3a and on the upper separators 3a, respectively.

In the process of heating the cutter, the cutter (or a movable part capable of transferring heat to the cutter) that is slid to cut the lower separator 3b and the upper separator 3b is heated to a predetermined temperature before cutting the separators 3.

Also, in the cutting process, when the lower separator 3b and the upper separator 3a are placed between the electrodes adjacent to the sliding position of the cutter, the cutter is slid to cut the lower separator 3b and the upper separator 3a.

Here, while the movable parts 20 and 40 are slid so that the cutters 30 and 60 are in contact with the separators 3, the separators 3 are heated and pressed so that the lower separator 3b and the upper separator 3a are thermally fused at the same time.

Only the 'cutter' or both the 'fixed part, the movable part, and the cutter' are heated to a predetermined temperature. For example, all the fixed part, the movable part, and the cutter may be heated in a range of 60°C to 250°C.

That is, since the cutter may pass through and press cut surfaces of the separators 3, and thermal fusion is performed by the pressing, a heating temperature at which the thermal fusion is achieved may vary depending on a descending speed. Therefore, it is heated to a temperature that is sufficient to achieve the thermal fusion as quickly as possible.

A descending speed may be adjusted according to the heating temperatures of the movable part and the fixed part.

That is, when each of the movable part and the fixed part is heated to a relatively high temperature (or according to the heating temperature of the cutter), a sliding speed of the movable part may be adjusted to be relatively increases, and when each of the movable part and the fixed part is heated to a relatively low temperature, the sliding speed of the movable part may be adjusted to be relatively decrease. Here, the sliding speed of the movable part means a rotation speed when the movable part has the roller shape as in the first embodiment and means a descending speed when the movable part has the bar shape as in the second embodiment.

When the movable part and the fixed part (comprising the cutter) are sufficiently heated, since the thermal fusion between the separators 3a and 3b is quickly achieved, the sliding speed of the movable part may maximally increase to increase in production speed. On the other hand, if it is not sufficiently heated, the sliding speed of the movable part may be appropriately slowed to secure a time taken to complete the thermal fusion.

Furthermore, the heating temperatures of the movable part and the fixed part and/or the sliding speed of the movable part may be adjusted according to thicknesses of the lower separator 3b and the upper separator 3a.

In the present invention having the configuration as described above, since the separators 3a and 3b are cut by the heated cutter, and the sealing of the separators 3a and 3b is performed when the cutting, an occurrence of folding of the separators 3a and 3b may be suppressed.

All the fixed part, the movable part, and the cutter may be heated to the predetermined temperature. Here, each of the movable part and the cutter may be heated to a temperature higher than that of the fixed part, and thus, the instantaneous thermal fusion may be achieved while cutting the inside of the separators.

An end of the cutter may be limited to a specific angle (15° to 120°), and thus, when cut, a thermal fusion time, a contact area with the separator 3, a pressure applied to the separator, and the like may be adjusted.

For example, when the angle of the end of the cutter is less than 15°, the thermal fusion efficiency may be lowered because the pressure acting for the thermal fusion of the separator 3. On the other hand, when the angle exceeds 120°, the pressure acting for cutting the separator 3 may be reduced to increase in possibility of occurrence of cutting defects. Therefore, in the present invention, the angle of the end of the cutter is limited in range of 15° to 120°, and thus, the thermal fusion with the separator 3 and the cutting may be performed at the same time.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

1: Positive electrode
2: Negative electrode
3: Separator (3a: upper separator, 3b: lower separator)
10, 50: Fixed part
20, 40: Movable part
30, 60: Cutter

## Claims

1. An apparatus for manufacturing a unit cell, in which a lower separator and an upper separator continuously move in a longitudinal direction, and the lower separator and the upper separator are cut between electrodes adjacent to each other in a process of manufacturing the unit, which is provided in a state in which the electrodes are stacked at regular intervals between the lower separator and the upper separator, the apparatus comprising:
a fixed part disposed under the lower separator and heated to a predetermined temperature;
a movable part aligned with the fixed part in a vertical direction on the upper separator; and
a cutter coupled to the movable part, heated to a predetermined temperature, and configured to cut the upper separator and the lower separator,
wherein the lower separator and the upper separator are cut by the cutter and thermally fused while passing between the fixed part and the movable part.

2. The apparatus of claim 1, wherein each of the movable part and the fixed part comprises a roller that rotates while the lower separator and the upper separator pass therebetween, and
the cutter protrudes from a surface of the movable part to press and cut the upper separator and the lower separator when the movable rotates.

3. The apparatus of claim 2, wherein a plurality of cutters are disposed at regular intervals on the surface of the movable part.

4. The apparatus of claim 3, wherein two cutters are disposed at an interval of 180 degrees from a center of the movable part.

5. The apparatus of claim 3, wherein four cutters are disposed at an interval of 90 degrees from a center of the movable part.

6. The apparatus of claim 2, wherein the cutter is formed so that inclined surfaces are formed at both sides so as to be symmetrical to each other, and an end, at which the inclined surfaces are in contact with each other, has a sharp shape.

7. The apparatus of claim 2, wherein an angle between both the inclined surfaces of the cutter is 15° or more.

8. The apparatus of claim 1, wherein the fixed part has a bar shape and is disposed to stand vertically under the lower separator,
the movable part is disposed to stand vertically above the upper separator so as to be slid vertically downward, and
the cutter is formed integrally to have a sharp shape at an end of the movable part.

9. The apparatus of claim 8, wherein the movable part is disposed to be dislocated so that the movable part passes through the lower separator and the upper separator to face one surface of the fixed part and to descend.

10. The apparatus of claim 9, wherein an end of the movable part is formed so that a surface facing the fixed part is a flat surface, and an opposite surface is an inclined surface,
wherein an angle of the inclined surface is 15° or more.

11. The apparatus of claim 10, wherein an angle of the inclined surface formed on the end of the movable part is formed in a range of 15° to 120°.

12. A method for manufacturing a unit cell, in which a lower separator and an upper separator continuously move in a longitudinal direction, and the lower separator and the upper separator are cut between electrodes adjacent to each other in a process of manufacturing the unit, which is provided in a state in which the electrodes are stacked at regular intervals between the lower separator and the upper separator, the method comprising:
an electrode and separator transfer process of providing electrodes and separators, in which the lower separator and the upper separator continuously move in the longitudinal direction, and the electrodes and the separators are provided in a state in which the electrodes are stacked at regular intervals between the lower separator and the upper separator;
a cutter heating process of heating a cutter, which is coupled to an end of the movable part and slid to pass through the lower separator and the upper separator, to a predetermined temperature; and
a cutting process of sliding the movable part to cut the lower separator and the upper separator by the cutter when the lower separator and the upper separator are disposed between the electrodes adjacent to each other at a sliding position of the cutter,
wherein, when the cutting is performed by the cutter, the lower separator and the upper separator are thermally fused at the same time by the heated cutter.

13. The method of claim 12, wherein the fixed part is disposed under the lower separator, and the movable part is disposed above the upper separator, and
in the cutting process, when the movable part descends to pass through the upper separator and the lower separator, the fixed part is disposed to be dislocated so as to support the lower separator at a lower side.

14. The method of claim 13, wherein all the movable part, the fixed part, and the cutter are heated to a predetermined temperature.

15. The method of claim 14, wherein all the fixed part, the movable part, and the cutter are heated in a range of 60°C to 250°C.

16. The method of claim 14, wherein the cutter is heated to a temperature higher than that of the fixed part.

17. The method of claim 13, wherein the movable part is configured so that one surface facing the fixed part at an end thereof is formed as a flat surface, and an inclined surface is formed on the other surface to have a sharp shape.

18. The method of claim 17, wherein an angle between the flat surface and the inclined surface at the end of the movable part formed to have the sharp shape is formed in a range of 15° to 120°.

19. The method of claim 15, wherein a sliding speed of the movable part is adjusted according to heating temperatures of the movable part and the fixed part.

20. The method of claim 19, wherein, when each of the movable part and the fixed part is heated to a relatively high temperature, the sliding speed of the movable part is adjusted to be relatively increase, and
when each of the movable part and the fixed part is heated to a relatively low temperature, the sliding speed of the movable part is adjusted to be relatively decrease.

21. The method of claim 15, wherein the heating temperatures of the movable part and the fixed part are adjusted according to thicknesses of the lower separator and the upper separator.
